# EUROPEAN PATENT APPLICATION

(11) **EP 1 773 087 A2**
(43) Date of publication of application: **11.04.2007**
(21) Application number: 07100415.4
(22) Date of filing: 20.02.2003
(51) Int. Cl.: H04Q 7/36, H04Q 7/30

(54) **Code allocation based on cross code correlation**

(30) Priority: 20.02.2002 US 358208 P; 05.08.2002 US 212986
(62) Divisional of application: 03713581.1
(71) Applicant: INTERDIGITAL TECHNOLOGY CORPORATION, Wilmington, DE 19801 (US)
(72) Inventor: Zeira, Ariela, Huntington, NY New York 11743 (US); Zeira, Eldad, Huntington, NY New York 11743 (US)
(74) Representative: Johansson, Magnus

(57) **Abstract**

The invention includes various approaches to assigning codes in wireless code division multiple access communication systems. The invention estimates the cross code correlation between codes to base the code assignment. One approach assigns codes having a high cross correlation to users having a low transmission power level. Another approach assigns code groups having a high cross correlation to a same coded composite transport channel. Another approach assigns codes using a cross correlation factor of each code to minimize a system noise rise. Another approach uses transmission or reception diversity to assign bad code groups to users having a different diversity relationship. Another approach uses a diversity factor and a cross code correlation factor to assign codes.

## Description

### BACKGROUND

This application generally relates to wireless code division multiple access communication systems. In particular, this application relates to code allocation in such systems using cross code correlation characteristics.

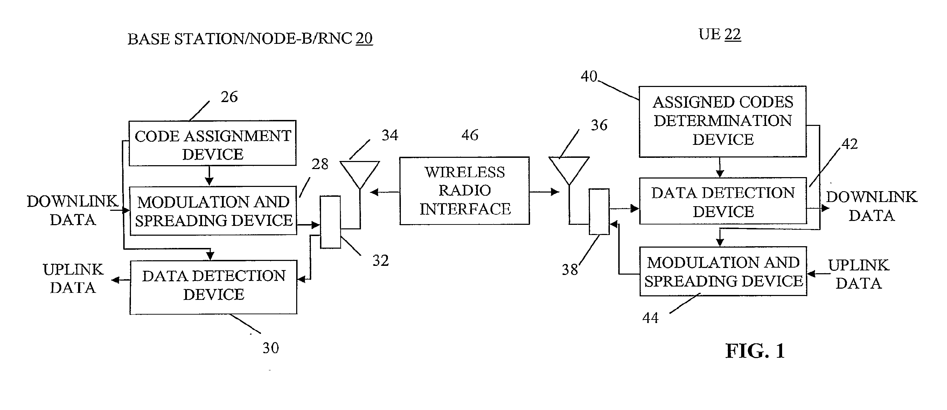

To send multiple communications simultaneously over a shared spectrum, CDMA communication systems distinguish the communications using codes. Figure 1 illustrates a simplified wireless code division multiple access (CDMA) communication system. The following discussion refers to components that may be located in either the base station, a Node-B or a radio network controller (RNC) 20, based on the implementation, as being located at the base station 20.

For downlink communications, codes are assigned by a code assignment device 26 of the base station 20 to support the downlink communications. Downlink data is processed by a modulation and spreading device 28 with the assigned codes to produce one or multiple downlink communications. The downlink communications are passed through an isolator or switch 32 and radiated by an antenna or antenna array 34 of the base station 20 through a wireless radio interface 46.

The user equipment 22 receives the downlink communications using an antenna or antenna array 36. The received communications pass through an isolator or switch 38 to a data detection device 42. The data detection device 42 recovers data from the received communications using the assigned downlink codes. These assigned codes may be determined by a form of blind code detection, be known a priori, the code assignment may be signaled or by other means. A code assignment determination device 40 determines the assigned codes.

For uplink communications, uplink data is processed by a modulation and spreading device 44 with uplink assigned codes to produce one or multiple uplink communications. The code assignment determination device 40 determines the codes to use for the uplink. The uplink communications are passed through the isolator or switch 38 and radiated by an antenna or antenna array 36 of the UE 22 through the wireless radio interface 46.

The base station 20 receives the uplink communications using its antenna or antenna array 34. The received communications pass through an isolator or switch 32 to a data detection device 30. The data detection device 30 recovers data from the received communications using the assigned uplink codes as determined by the code assignment device 26.

When a user in such a system requires additional codes to support a new or existing service, the code assignment decision is based on the available codes and power budgets. To illustrate, the user requires one additional uplink code to support a new service. A code out of the available codes is selected to support the service. The required transmission power level for a communication using this new code is determined, such as by using a path loss estimate, known interference levels and other factors. If the use of this code requires transmission power levels beyond the systems resources. The new service is not permitted.

As the number of codes increases, the effectiveness of this assignment approach degrades. The likelihood of using or finding codes with good cross correlation properties decreases, as the number of used codes increases. Although codes are designed to have minimal or low cross interference, in practice, some codes may exhibit high cross correlation with other codes. These codes will typically be eliminated from use in the system. Additionally, a group of codes, a code group, may exhibit a high cross correlation with each other, but acceptable cross correlation with other codes. Although eliminating these codes reduces cross interference, it also reduces the number of available codes to assign.

Accordingly, it is desirable to have other code assignment approaches to allow more efficient code assignments.

SUMMARY

The invention includes various approaches to assigning codes in wireless code division multiple access communication systems. The invention estimates the cross code correlation between codes to base the code assignment. One approach assigns codes having a high cross correlation to users having a low transmission power level. Another approach assigns code groups having a high cross correlation to a same coded composite transport channel. Another approach assigns codes using a cross correlation factor of each code to minimize a system noise rise. Another approach uses transmission or reception diversity to assign bad code groups to users having a different diversity relationship. Another approach uses a diversity factor and a cross code correlation factor to assign codes.

BRIEF DESCRIPTION OF THE DRAWING(S)

Figure 1 is an illustration of a simplified base station and UE.

Figure 2 is an illustration of a simplified base station and UE using cross code correlation for code assignments.

Figure 3 is a flow chart for assigning codes having a high cross code correlation to communications having a substantially same transmission power level.

Figure 4 is a flow chart for assigning code groups having a high cross code correlation to a same coded composite transport channel.

Figure 5 is a flow chart for assigning codes having a high cross code correlation to communications having a low transmission power level.

Figure 6 is a flow chart for assigning codes based on an estimated noise rise.

Figure 7 is an illustration of a simplified base station and UE using cross code correlation and diversity relationships between users for code assignments.

Figure 8 is a flow chart for assigning code groups having a high cross code correlation to UEs having a different diversity relationship.

Figure 9 is a flow chart for assigning codes using both cross code correlation and diversity correlation.

Figure 10 is a flow chart for assigning codes using a weighted average noise rise/change over all the slots for a time division duplex/CDMA or time division multiple access/CDMA communication system.

DETAILED DESCRIPTION OF THE PREFERRED EMBODIMENT(S)

The embodiments of the invention can generally be used with any type of CDMA system, such as a time division duplex communication system using CDMA (TDD/CDMA), frequency division duplex communication system using CDMA (FDD/CDMA) or a hybrid time division multiple access/CDMA communication system (TDMA/CDMA).

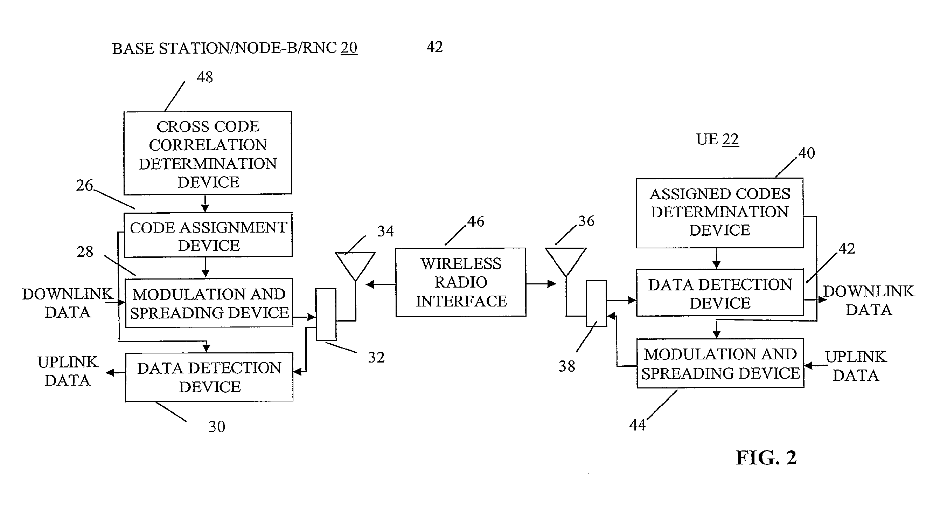

Figure 2 illustrates an embodiment of a code allocation system using cross code correlation. A cross code correlation determination device 48 evaluates the cross correlation between codes. The cross code correlation may be determined off-line and stored. Alternately, the cross code correlation may be determined on-line, as needed.

One approach to evaluating codes for cross correlation ranks the codes from a best code, exhibiting no or minimal cross code correlation, to a worst code, exhibiting the most cross code correlation. Another approach categorizes codes, such as by using a threshold test. One categorization approach uses two categories: good codes, exhibiting no or minimal cross code correlation, and bad codes, exhibiting high cross code correlation. Other categorizations may be used, such as good, medium and bad.

Additionally, code groups, such as groups of two codes, three codes or more, may be evaluated. The codes of the group are evaluated with respect to the cross code correlation to each other. The code groups may be ranked from groups having no or a low cross correlation to groups having a high cross correlation to each other. Alternately, the groups may be categorized, such as into good groups, having no or little cross correlation, and bad groups, having high cross correlation to each other.

Based on the code evaluation, the code assignment device 26 assigns codes to uplink and downlink communications. The UE 22 determines the code assignment using an assigned code determination device 40. For downlink communications, downlink data is processed by a modulation and spreading device 28 with the assigned codes to produce one or multiple downlink communications. The downlink communications are passed through an isolator or switch 32 and radiated by an antenna or antenna array 34 of the base station 20 through a wireless radio interface 46.

The UE 22 receives the downlink communications using an antenna or antenna array 36. The received communications pass through an isolator or switch 38 to a data detection device 42. The data detection device 42 recovers data from the received communications using the assigned downlink codes.

For uplink communications, uplink data is processed by a modulation and spreading device 44 with the uplink assigned codes to produce one or multiple uplink communications. The uplink communications are passed through an isolator or switch 38 and radiated by an antenna or antenna array 36 of the UE 22 through the wireless radio interface 46.

The base station 20 receives the uplink communications using its antenna or antenna array 34. The received communications pass through an isolator or switch 32 to a data detection device 30. The data detection device 30 recovers data from the received communications using the assigned uplink codes.

One approach to assign codes in the downlink assigns code groups having a high cross code correlation to each other to a user or users transmitting at a substantially same power level. Codes transmitted at different power levels are more difficult to distinguish than codes transmitted at the substantially the same power level. As a result, by transmitting codes having a high cross correlation at the same power level, the impact of high cross code correlation is minimized.

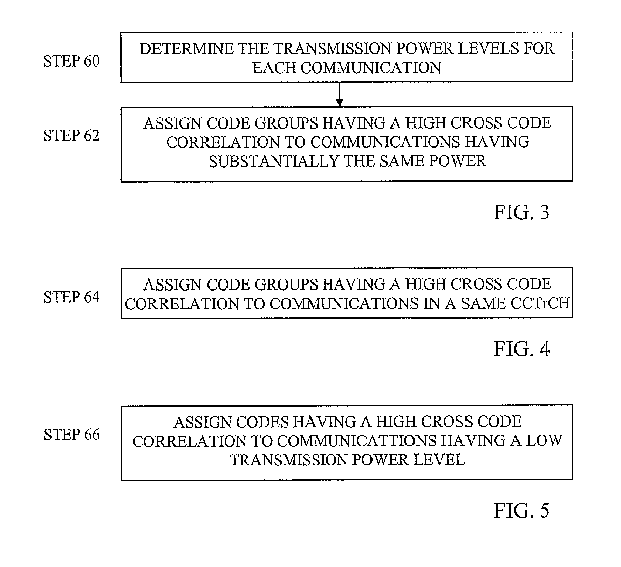

To assign the codes as shown in Figure 3, the transmission power levels for each downlink communication is determined, step 60. The code groups having a high cross code correlation are assigned to the communications having substantially the same power level, step 62.

Since the transmission power levels for communications to different users and even to the same user in a different coded composite transport channel (CCTrCH) vary over time with respect to each other, it is preferred to only assign code groups having a high cross correlation to the same CCTrCH. Accordingly, as shown in Figure 4, if a code group having a high cross correlation is to be used, that code group is assigned to the same CCTrCH, step 64. This code assignment approach can also be applied to the uplink, preferably when all communications use the same spreading factor.

Another approach as shown in Figure 5 assigns codes having a high cross correlation to communications having a low transmission power level, step 66. This approach minimizes the cross interference that a bad code (code having a high cross correlation) induces on the other communications and vice versa. Conversely, codes having a low cross correlation are assigned to communications having a high transmission power level.

In another approach, the cross code correlation can be used to estimate a change in noise level resulting from changing codes or adding new codes. A code assignment can be determined to minimize the noise level.

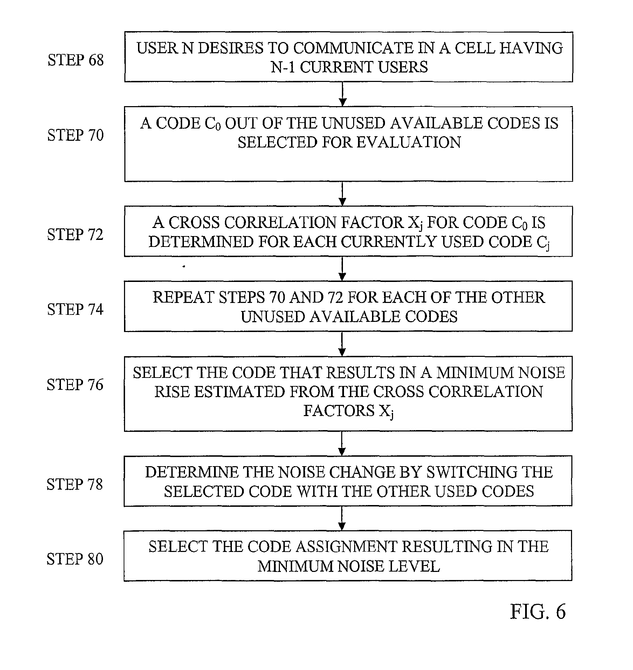

Figure 6 is a preferred approach using estimated noise levels to assigning a new code to a new user of a CDMA system. A user N desires to communicate in a cell having N-1 current users, step 68. Out of the unused available codes, a code C₀ is selected for evaluation, step 70. The cross code correlation Xⱼ of C₀ is determined for each currently used code Cⱼ, step 72. Using the determined cross code correlation factors Xⱼ, the noise rise from adding the new user using C₀ is determined. This procedure is repeated to estimate the noise rise for each of the unused codes, step 74. The code that results in the minimum noise rise is selected to support the new user, step 76.

To further optimize the code assignment, code swapping may be used. After the minimum noise rise code is determined, the noise change by switching this code for each of the other used codes is determined, step 78. The overall code assignment resulting in the minimum estimated noise level is selected, step 80. To illustrate, code Cₙ is the minimum noise rise code for user N. The noise change for swapping code Cₙ with each of the other users' codes, C₁ to Cₙ₋₁, is determined. A code Cᵢ is found where if Cₙ is swapped for Cᵢ, the noise is minimized. User N is subsequently assigned code Cᵢ and the user of Cᵢ will now use code Cₙ.

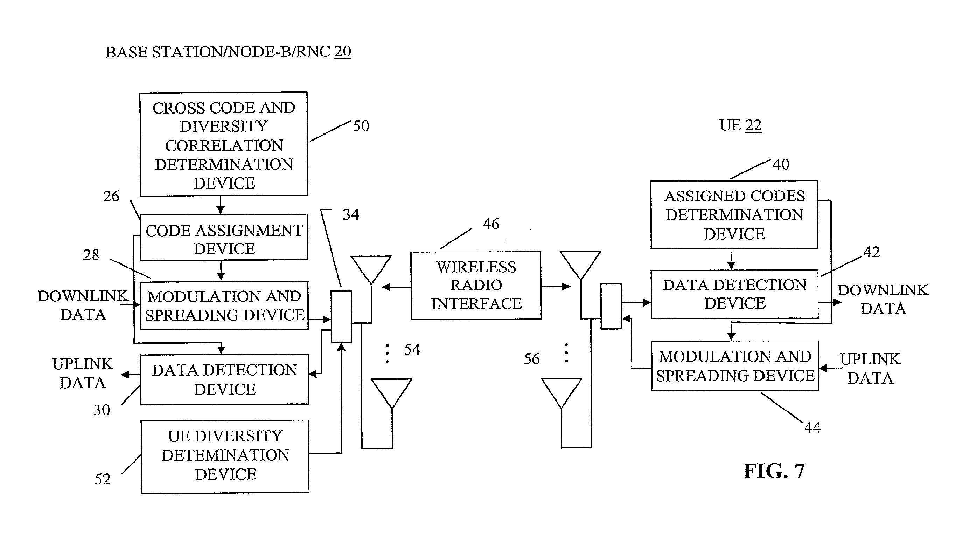

Figure 7 illustrates an embodiment of a code allocation system where spatial processing is used. An antenna array 54, 56 may be used at either the base station 20, UE 22 or both, as shown in Figure 7, for spatial diversity. Beams may be formed at a transmitting antenna array 54, 56 to focus a communication onto a particular reception site or a receiving antenna array 54, 56 is used to steer the receiver towards a transmission source. The antenna array 54, 56 of the base station 20 or UE 22 as shown in Figure 7 may be used for such beam forming and steering.

In the downlink, multiple beams separate codes of users of that base station's cell. Downlink reception beams at the UE 22 separate codes of that UE's cell from other cells. In the uplink, multiple beams used for UE transmissions separate codes of that UE 22 from codes of UEs 22 in other cells. Uplink reception beams at the base station 20, separate codes for each of that base station's cell UEs 22.

If downlink transmission diversity or uplink reception diversity schemes are used, users having a different diversity relationship have no or little cross interference. The term diversity relationship refers to users in separate downlink transmission beams or in separate uplink transmission beams. These users communications are effectively orthogonal to each other. As a result, code groups having a high cross code correlation to each other may be assigned to users with a different diversity relationship with no or little cross correlation.

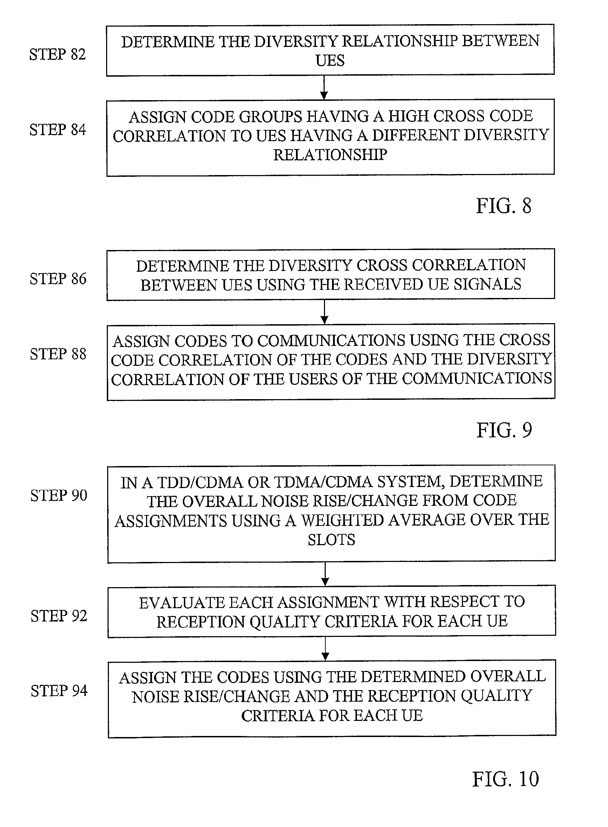

One approach to assign codes in such systems is slow code allocation as shown in Figure 8. Slow code allocation is preferably used in systems where codes are changed slowly, such as over seconds or even longer. In slow allocation, code groups having a high cross code correlation are not assigned to users having a similar or same diversity relationship. A UE diversity determination device 52 determines the diversity relationships between the UEs 22, step 82. One approach to estimate the diversity relationship determines the direction of arrival (DOA) of signals transmitted from users as received at the base station 20. Also, geolocation techniques may be used. If a code group having a high cross code correlation is to be used, the codes of the group are assigned by a cross code and diversity correlation determination device 50 to UEs 22 having different diversity relationships, step 84. As a result, these codes will not interfere with each other.

Another approach to assign codes is fast code allocation as shown in Figure 9. Fast code allocation is preferably used in systems where codes can be changed on the fly, such as the high-speed channel (HSDPA) proposed for the Universal Mobile Telecommunications System (UMTS). It can be used in systems where classical beam forming is not employed. The UE diversity determination device 52 determines the diversity correlation between the received UE signals, step 86. The codes are assigned to the users by the code cross and diversity correlation determination device 50 based on the diversity relationship between the users and the cross code correlation, step 88. Preferably, a diversity factor Sᵢ is assigned to each user and a cross code correlation factor Yⱼ is assigned to each code. Using the factors, a code assignment is determined which minimizes the resulting cross code noise from the assignment. The resulting cross code noise is preferably modeled using a function, such as the product of Sᵢ and Yⱼ..

Another embodiment is used with TDD/CDMA or TDMA/CDMA systems as shown in Figure 10. These systems use time slots as well as codes to distinguish communications. In such systems, the overall reception quality is based on a weighted average of the reception quality in each slot. As a result, poor reception quality in one slot can be compensated for in other slots. The cross code correlation determination device 48 or the cross code and diversity correlation device 50 in such systems, preferably, determines the overall noise rise/change from code assignments using a weighted average over the slots, step 90. Each assignment is also checked to see if each user meets minimum reception quality criteria, step 92. Either the code assignment minimizing the noise over the slots and meeting the minimum quality criteria is selected or the code assignment having a most optimal joint solution minimizing the noise over the slots and maximizing each user's reception quality is selected, step 92, 94.

### EMBODIMENTS

1. A method for assigning codes to communications in a wireless code division multiple access communication system, the method comprising:
   providing codes for potential assignment;
   evaluating the provided codes to determine codes having a high cross code correlation;
   determining users of the system having a low transmission power level; and
   assigning the provided codes having a high cross code correlation to the users having a low transmission power level.
2. The method of item 1 wherein the evaluating the provided codes is by ranking the codes from a highest cross code correlation to a least cross code correlation.
3. The method of item 1 wherein the evaluating the provided codes is by categorizing the codes using a threshold test.
4. The method of item 3 wherein the categorizing categorizes the provided codes into a high cross code correlation category and a low cross code correlation category.
5. A wireless code division multiple access radio network controller (RNC) comprising:
   means for evaluating provided codes for potential assignment to determine codes having a high cross code correlation;
   means for determining users having a low transmission power level; and
   means for assigning the provided codes having a high cross code correlation to the users having a low transmission power level.
6. The RNC of item 5 wherein the evaluating the provided codes is by ranking the codes from a highest cross code correlation to a least cross code correlation.
7. The RNC of item 5 wherein the evaluating the provided codes is by categorizing the codes using a threshold test.
8. A wireless code division multiple access radio network controller (RNC) comprising:
   a code assignment device for evaluating provided codes for potential assignment to determine codes having a high cross code correlation; for determining users having a low transmission power level; and for assigning the provided codes having a high cross code correlation to the users having a low transmission power level.
9. The RNC of item 8 wherein the evaluating the provided codes is by ranking the codes from a highest cross code correlation to a least cross code correlation.
10. The RNC of item 8 wherein the evaluating the provided codes is by categorizing the codes using a threshold test.
11. The RNC of item 10 wherein the categorizing categorizes the provided codes into a high cross code correlation category and a low cross code correlation category.
12. A wireless code division multiple access user equipment (UE) comprising:
   an assigned codes determination device for determining codes assigned to support communications of the UE, the code assignment determined by evaluating provided codes for potential assignment to determine codes having a high cross code correlation; determining users having a low transmission power level; and assigning the provided codes having a high cross code correlation to the users having a low transmission power level.
13. The UE of item 12 wherein the evaluating the provided codes is by ranking the codes from a highest cross code correlation to a least cross code correlation.
14. The UE of item 12 wherein the evaluating the provided codes is by categorizing the codes using a threshold test.
15. The UE of item 14 wherein the categorizing categorizes the provided codes into a high cross code correlation category and a low cross code correlation category.
16. A method for assigning codes to communications in a wireless code division multiple access communication system, the method comprising:
   providing codes for potential assignment;
   evaluating the provided codes to determine bad groups of codes having a high cross code correlation; and
   assigning the provided codes in bad groups to transmissions having a substantially similar transmission power level.
17. The method of item 16 wherein the evaluating the provided codes to determine bad code groups comprises ranking code groups from a low cross correlation to a high cross correlation of codes within each group.
18. The method of item 16 wherein the evaluating the provided codes to determine bad code groups comprises categorizing code groups.
19. A wireless code division multiple access radio network controller (RNC) comprising:
   means for evaluating provided codes for potential assignment to determine bad groups of codes having a high cross code correlation; and
   means for assigning the provided codes in bad groups to transmissions having a substantially similar transmission power level.
20. The RNC of item 19 wherein the evaluating the provided codes to determine bad code groups comprises ranking code groups from a low cross correlation to a high cross correlation of codes within each group.
21. The RNC of item 19 wherein the evaluating the provided codes to determine bad code groups comprises categorizing code groups.
22. A wireless code division multiple access radio network controller (RNC) comprising:
   a code assignment device for evaluating provided codes for potential assignment to determine bad groups of codes having a high cross code correlation; and for assigning the provided codes in bad groups to transmissions having a substantially similar transmission power level.
23. The RNC of item 22 wherein the evaluating the provided codes to determine bad code groups comprises ranking code groups from a low cross correlation to a high cross correlation of codes within each group.
24. The RNC of item 22 wherein the evaluating the provided codes to determine bad code groups comprises categorizing code groups.
25. A wireless code division multiple access user equipment (UE) comprising:
   an assigned codes determination device for determining codes assigned to support communications of the UE, the code assignment determined by evaluating provided codes for potential assignment to determine bad groups of codes having a high cross code correlation and assigning the provided codes in bad groups to transmissions having a substantially similar transmission power level.
26. The UE of item 25 wherein the evaluating the provided codes to determine bad code groups comprises ranking code groups from a low cross correlation to a high cross correlation of codes within each group.
27. The UE of item 25 wherein the evaluating the provided codes to determine bad code groups comprises categorizing code groups.
28. A method for assigning codes to communications in a wireless code division multiple access communication system, the method comprising:
   providing codes for potential assignment;
   evaluating provided codes for potential assignment to determine bad groups of codes having a high cross code correlation; and
   assigning the provided codes to coded composite transport channels (CCTrCHs), wherein if at least two codes of one of the bad code groups are to be assigned, the at least two codes are assigned to a same CCTrCH.
29. The method of item 28 wherein the evaluating the provided codes to determine bad code groups comprises ranking code groups from a low cross correlation to a high cross correlation of codes within each group.
30. The method of item 28 wherein the evaluating the provided codes to determine bad code groups comprises categorizing code groups.
31. The method of item 28 wherein the provided codes are codes for downlink code assignment.
32. The method of item 28 wherein the provided codes are codes for uplink code assignment for communications having a same spreading factor.
33. A wireless code division multiple access radio network controller (RNC) comprising:
   means for evaluating provided codes for potential assignment to determine bad groups of codes having a high cross code correlation; and
   means for assigning the provided codes to coded composite transport channels (CCTrCHs), wherein if at least two codes of one of the bad code groups are to be assigned, the at least two codes are assigned to a same CCTrCH.
34. The RNC of item 33 wherein the evaluating the provided codes to determine bad code groups comprises ranking code groups from a low cross correlation to a high cross correlation of codes within each group.
35. The RNC of item 33 wherein the evaluating the provided codes to determine bad code groups comprises categorizing code groups.
36. The RNC of item 33 wherein the provided codes are codes for downlink code assignment.
37. The RNC of item 33 wherein the provided codes are codes for uplink code assignment for communications having a same spreading factor.
38. A wireless code division multiple access radio network controller (RNC) comprising:
   a code assignment device for evaluating provided codes for potential assignment to determine bad groups of codes having a high cross code correlation; and for assigning the provided codes to coded composite transport channels (CCTrCHs), wherein if at least two codes of one of the bad code groups are to be assigned, the at least two codes are assigned to a same CCTrCH.
39. The RNC of item 38 wherein the evaluating the provided codes to determine bad code groups comprises ranking code groups from a low cross correlation to a high cross correlation of codes within each group.
40. The RNC of item 38 wherein the evaluating the provided codes to determine bad code groups comprises categorizing code groups.
41. The RNC of item 38 wherein the provided codes are codes for downlink code assignment.
42. The RNC of. item 38 wherein the provided codes are codes for uplink code assignment for communications having a same spreading factor.
43. A wireless code division multiple access user equipment comprising:
   an assigned codes determination device for determining codes assigned to support communication of the UE, the code assignment determined by evaluating provided codes for potential assignment to determine bad groups of codes having
   a high cross code correlation; and assigning the provided codes to coded composite transport channels (CCTrCHs), wherein if at least two codes of one of the bad code groups are to be assigned, the at least two codes are assigned to a same CCTrCH.
44. The UE of item 43 wherein the evaluating the provided codes to determine bad code groups comprises ranking code groups from a low cross correlation to a high cross correlation of codes within each group.
45. The UE of item 43 wherein the evaluating the provided codes to determine bad code groups comprises categorizing code groups.
46. The UE of item 43 wherein the provided codes are codes for downlink code assignment.
47. The UE of item 43 wherein the provided codes are codes for uplink code assignment for communications having a same spreading factor.
48. A method for assigning codes to communications in a wireless code division multiple access communication system, the method comprising:
   providing codes for potential assignment;
   determining a cross correlation factor for each potential code, the cross correlation factor indicating a cross code correlation between that potential code and other codes;
   for each potential code, estimating a noise change to the system using the cross correlation factor; and
   selecting a code of the potential codes for assignment having a minimum ;noise change.
49. The method of item 48 wherein the selected code is assigned to a new communication.
50. The method of item 48 further comprising:
   estimating a noise change resulting from exchanging the selected code with codes currently used by the system; and
   if the estimated noise change for exchanging the selected code with one of the currently used codes indicates a lower overall noise level by exchanging the codes, the selected and the one currently used code are exchanged.
51. A wireless code division multiple access radio network controller (RNC) comprising:
   means for determining a cross correlation factor for each potential code for potential assignment, the cross correlation factor indicating a cross code correlation between that potential code and other codes;
   means for each potential code, for estimating a noise change using the cross correlation factor; and
   means for selecting a code of the potential codes for assignment having a minimum noise change.
52. The RNC of item 51 wherein the selected code is assigned to a new communication.
53. The RNC of item 52 further comprising:
   means for estimating a noise change resulting from exchanging the selected code with currently used codes currently; and
   means for if the estimated noise change for exchanging the selected code with one of the currently used codes indicates a lower overall noise level by exchanging the codes, exchanging the selected and the one currently used code.
54. A wireless code division multiple access radio network controller (RNC) comprising:
   a code assignment device for determining a cross correlation factor for each potential code for potential assignment, the cross correlation factor indicating a cross code correlation between that potential code and other codes; for each potential code, for estimating a noise change using the cross correlation factor; and for selecting a code of the potential codes for assignment having a minimum noise change.
55. The RNC of item 54 wherein the selected code is assigned to a new communication.
56. The RNC of item 54 wherein the code assignment device further for estimating a noise change resulting from exchanging the selected code with currently used codes; and for if the estimated noise change for exchanging the selected code with one of the currently used codes indicates a lower overall noise level by exchanging the codes, exchanging the selected and the one currently used code.
57. A wireless code division multiple access user equipment (UE) comprising:
   an assigned codes determination device determining codes assigned to support communications of the UE, the code assignment determined by determining a cross correlation factor for each potential code for potential assignment, the cross correlation factor indicating a cross code correlation between that potential code and other codes; for each potential code, estimating a noise change using the cross correlation factor; and selecting a code of the potential codes for assignment having a minimum noise change.
58. The UE of item 57 wherein the selected code is assigned to a new communication.
59. The UE of item 57 wherein the code assignment further determined by estimating a noise change resulting from exchanging the selected code with currently used codes; and if the estimated noise change for exchanging the selected code with one of the currently used codes indicates a lower overall noise level by exchanging the codes, exchanging the selected and the one currently used code.
60. A method for assigning codes to communications in a wireless code division multiple access communication system using spatial diversity, the method comprising:
   providing codes for potential assignment;
   determining users having a different diversity relationship;
   evaluating the provided codes to determine bad groups of codes having a high cross code correlation; and
   assigning the provided codes to users, wherein if at least two codes of one of the bad code groups are to be assigned, the at least two codes are assigned to the users determined to have a different diversity relationship.
61. A wireless code division multiple access radio network controller (RNC) comprising:
   means for determining users having a different diversity relationship; means for evaluating provided codes for potential assignment to determine bad groups of codes having a high cross code correlation; and
   means for assigning the provided codes to users, wherein if at least two codes of one of the bad code groups are to be assigned, the at least two codes are assigned to the users determined to have a different diversity relationship.
62. A wireless code division multiple access radio network controller (RNC) comprising:
   a code assignment device for determining users having a different diversity relationship; for evaluating provided codes for potential assignment to determine bad groups of codes having a high cross code correlation; and for assigning the provided codes to users, wherein if at least two codes of one of the bad code groups are to be assigned, the at least two codes are assigned to the users determined to have a different diversity relationship.
63. A wireless code division multiple access user equipment (UE) comprising:
   an assigned codes determination device for determining codes assigned to support communications of the UE, the code assignment determined by determining users having a different diversity relationship; evaluating provided codes for potential assignment to determine bad groups of codes having a high cross code correlation; and assigning the provided codes to users, wherein if at least two codes of one of the bad code groups are to be assigned, the at least two codes are assigned to the users determined to have a different diversity relationship.
64. A method for assigning codes to communication in a wireless code division multiple access communication system using spatial diversity, the method comprising:
   providing codes for potential assignment and codes currently used by users;
   determining a diversity factor for each user using a direction of arrival of signals received at a base station of that user;
   determining a cross correlation factor for each provided code, the cross correlation factor indicating a cross code correlation between that provided code and other codes;
   determining an optimal code assignment using the diversity and cross code correlation factors; and
   assigning the provided codes to users based on the optimal code assignment.
65. The method of item 64 wherein the determining an optimal code assignment is based on a product of the diversity and the cross code correlation factors.
66. The method of item 64 wherein the code division multiple access communication system is a time division duplex communication system using code division multiple access and the optimal code assignment minimizes a weighted average of an' estimated reception quality over all time slots.
67. The method of item 64 wherein the code division multiple access communication system is a time division multiple access communication system using code division multiple access and the optimal code assignment minimizes a weighted average of an estimated reception quality over all time slots.
68. The method of item 64 wherein the code division multiple access communication system is a time division duplex communication system using code division multiple access and the optimal code assignment is a joint solution to minimize a weighted average of an estimated reception quality over all time slots and maximize each user reception quality.
69. The method of item 64 wherein the code division multiple access communication system is a time division multiple access communication system using code division multiple access and the optimal code assignment is a joint solution to minimize a weighted average of an estimated reception quality over all time slots and maximize each user reception quality.
70. A wireless code division multiple access radio network controller (RNC) comprising:
   means for determining a diversity factor for each user using a direction of arrival of received signals of that user;
   means for determining a cross correlation factor for each provided code for potential assignment, the cross correlation factor indicating a cross code correlation between that provided code and other codes;
   means for determining an optimal code assignment using the diversity and cross code correlation factors; and
   means for assigning the provided codes to users based on the optimal code assignment.
71. The RNC of item 70 wherein the determining an optimal code assignment is based on a product of the diversity and the cross code correlation factors.
72. The RNC of item 70 wherein the RNC is a time division duplex using code division multiple access RNC and the optimal code assignment minimizes a weighted average of an estimated reception quality over all time slots.
73. The RNC of item 70 wherein the RNC is a time division multiple access using code division multiple access RNC and the optimal code assignment minimizes a weighted average of an estimated reception quality over all time slots.
74. The RNC of item 70 wherein the RNC is a time division duplex using code division multiple access RNC and the optimal code assignment is a joint solution to minimize a weighted average of an estimated reception quality over all time slots and maximize each user reception quality.
75. The RNC of item 70 wherein the RNC is a time division multiple access using code division multiple access RNC and the optimal code assignment is a joint solution to minimize a weighted average of an estimated reception quality over all time slots and maximize each user reception quality.
76. A wireless code division multiple access radio network controller (RNC) comprising:
   means for determining a diversity factor for each user using a direction of arrival of received signals of that user;
   means for determining a cross correlation factor for each provided code for potential assignment, the cross correlation factor indicating a cross code correlation between that provided code and other codes;
   means for determining an optimal code assignment using the diversity and cross code correlation factors; and
   means for assigning the provided codes to users based on the optimal code assignment.
77. The RNC of item 76 wherein the determining an optimal code assignment is based on a product of the diversity and the cross code correlation factors.
78. The RNC of item 76 wherein the RNC is a time division duplex using code division multiple access RNC and the optimal code assignment minimizes a weighted average of an estimated reception quality over all time slots.
79. The RNC of item 76 wherein the RNC is a time division multiple access using code division multiple access RNC and the optimal code assignment minimizes a weighted average of an estimated reception quality over all time slots.
80. The RNC of item 76 wherein the RNC is a time division duplex using code division multiple access RNC and the optimal code assignment is a joint solution to minimize a weighted average of an estimated reception quality over all time slots and maximize each user reception quality.
81. The RNC of item 76 wherein the RNC is a time division multiple access using code division multiple access RNC and the optimal code assignment is a joint solution to minimize a weighted average of an estimated reception quality over all time slots and maximize each user reception quality.
82. A wireless code division multiple access user equipment (UE) comprising:
   an assigned codes determination device for determining codes assigned to support communications of the UE, the code assignment determined by determining a diversity factor for each user using a direction of arrival of received signals of that user; determining a cross correlation factor for each provided code for potential assignment, the cross correlation factor indicating a cross code correlation between that provided code and other codes; determining an optimal code assignment using the diversity and cross code correlation factors; and assigning the provided codes to users based on the optimal code assignment.
83. The UE of item 82 wherein the determining an optimal code assignment is based on a product of the diversity and the cross code correlation factors.
84. The UE of item 82 wherein the UE is a time division duplex using code division multiple access UE and the optimal code assignment minimizes a weighted average of an estimated reception quality over all time slots.
85. The UE of item 82 wherein the UE is a time division multiple access using code division multiple access UE and the optimal code assignment minimizes a weighted average of an estimated reception quality over all time slots.
86. The UE of item 82 wherein the UE is a time division duplex using code division multiple access UE and the optimal code assignment is a joint solution to minimize a weighted average of an estimated reception quality over all time slots and maximize each user reception quality.
87. The UE of item 82 wherein the UE is a time division multiple access using code division multiple access UE and the optimal code assignment is a joint solution to minimize a weighted average of an estimated reception quality over all time slots and maximize each user reception quality.

## Claims

1. A method for assigning codes to communications in a wireless code division multiple access (CDMA) communication system, the method comprising:
providing codes for potential assignment;
evaluating the provided codes to determine codes having a high cross code correlation;
determining users of the system having a low transmission power level; and
assigning the provided codes so that the provided codes having the high cross code correlation are assigned to the users having the low transmission power level and the provided codes having a low cross code correlation are assigned to the users having a high transmission power level.

2. The method of claim 1 wherein the evaluating the provided codes is by ranking the codes from a highest cross code correlation to a least cross code correlation.

3. The method of claim 1 wherein the evaluating the provided codes is by categorizing the codes using a threshold test.

4. The method of claim 3 wherein the categorizing categorizes the provided codes into a high cross code correlation category and a low cross code correlation category.

5. A wireless code division multiple access (CDMA) radio network controller (RNC) comprising:
a code assignment device for evaluating provided codes for potential assignment to determine codes having a high cross code correlation and to determine users having a low transmission power level,wherein the code assignment device is adapted to assign the provided codes so that the provided codes having the high cross code correlation are assigned to the users having the low transmission power level and the provided codes having a low cross code correlation are assigned to the users having a high transmission power level.

6. The RNC of claim 5 wherein the evaluating the provided codes is by ranking the codes from a highest cross code correlation to a least cross code correlation.

7. The RNC of claim 5 wherein the evaluating the provided codes is by categorizing the codes using a threshold test.

8. The RNC of claim 7 wherein the categorizing categorizes the provided codes into a high cross code correlation category and a low cross code correlation category.

9. A wireless code division multiple access (CDMA) user equipment (UE) comprising:
an assigned codes determination device for determining codes assigned to support communications of the UE, the code assignment determined by evaluating provided codes for potential assignment to determine codes having a high cross code correlation, wherein the assigned codes determination device is adapted to assign the provided codes so that the provided codes having the high cross code correlation are assigned to users having a low transmission power level and the provided codes having a low cross code correlation are assigned to users having a high transmission power level.

10. The UE of claim 9 wherein the evaluating the provided codes is by ranking the codes from a highest cross code correlation to a least cross code correlation.

11. The UE of claim 9 wherein the evaluating the provided codes is by categorizing the codes using a threshold test.

12. The UE of claim 11 wherein the categorizing categorizes the provided codes into a high cross code correlation category and a low cross code correlation category.
